# EUROPÄISCHE PATENTSCHRIFT

(11) **EP 2 132 526 B1**
(45) Veröffentlichungstag und Bekanntmachung des Hinweises auf die Patenterteilung: **13.05.2015**
(21) Anmeldenummer: 08716411.7
(22) Anmeldetag: 10.03.2008
(51) Int. Cl.: G01B 21/08, B22D 11/06

(54) **VORRICHTUNG ZUR DICKENMESSUNG UND VERFAHREN HIERFÜR**
DEVICE FOR THICKNESS MEASUREMENT AND METHOD THEREFOR
DISPOSITIF DE MESURE D'ÉPAISSEUR ET PROCÉDÉ ASSOCIÉ

(30) Priorität: 09.03.2007 DE 102007011690; 06.03.2008 DE 102008012975
(43) Veröffentlichungstag der Anmeldung: 16.12.2009
(73) Patentinhaber: SMS Siemag AG, 40237 Düsseldorf (DE); Salzgitter Flachstahl GmbH, 38239 Salzgitter (DE)
(72) Erfinder: BAUSCH, Jörg, 40629 Düsseldorf (DE); KARDUCK, Josef, 40629 Düsseldorf (DE); RUNGE, Andreas, 42857 Remscheid (DE); SCHWEDMANN, Johannes, 47057 Duisburg (DE); WANS, Jochen, 40667 Meerbusch (DE); SPITZER, Karl-Heinz, 38678 Clausthal-Zellerfeld (DE); EICHHOLZ, Hellfried, 31241 Ilsede (DE)
(74) Vertreter: Klüppel, Walter
(86) Internationale Anmeldenummer: PCT/EP2008/001902
(87) Internationale Veröffentlichungsnummer: WO 2008/110330

(56) Entgegenhaltungen:
- EP-A- 0 334 802
- DE-A1- 19 618 923
- DE-C1- 19 746 728
- JP-A- 61 137 658
- US-A- 4 335 609

## Beschreibung

### Technisches Gebiet

Die Erfindung betrifft eine Vorrichtung zur Messung einer Dicke mittels einer Messvorrichtung und ein Verfahren zur Durchführung einer Messung mittels einer Messvorrichtung, wobei insbesondere die Dicke einer Schmelze innerhalb einer Metallgießanlage messbar ist. Die Erfindung betrifft daher insbesondere eine Vorrichtung zur Messung einer Dicke gemäß Anspruch 1. Weiterhin betrifft die Erfindung ein Verfahren gemäß Anspruch 9 und eine Verwendung nach Anspruch 15.

### Stand der Technik

Beim Gießen von Bändern oder Profilen aus Metallen oder Metalllegierungen insbesondere nach dem horizontalen Bandgießverfahren tritt die heiße Schmelze, wie insbesondere Metall- oder Stahlschmelze, aus einem Gefäß auf eine mitlaufende Kokille. Bei dieser Anordnung wird die Gießbreite durch die Anordnung seitlicher Wände gewährleistet, wobei diese seitlichen Wände stationär oder auch verlagerbar oder einstellbar sind, um verschiedene Breiten von Bändern beim Gießprozess gewährleisten zu können.

Bei diesem Prozess zur Herstellung von insbesondere Bändern oder Profilen ist die Schmelze an der Oberseite nicht einer Kokillenwand ausgesetzt, so dass die Oberfläche der Luft bzw. einer gezielt einstellbaren Atmosphäre ausgesetzt ist.

Bei einem solchen Prozess wird somit die Dicke der Schmelze nicht durch eine Kokillenwand begrenzt, sondern sie ist über den Massenfluss aus einem Zuführsystem einstellbar und kann über die Länge und/oder die Breite variieren, so dass es in Breitenrichtung zu keilförmigen Ungleichförmigkeiten oder in Längsrichtung zu wellenförmigen Ungleichförmigkeiten kommen kann.

Dieses Verfahren zum Gießen von beispielsweise Bändern oder Profilen wird auch Direct Strip Casting (DSC) bezeichnet und ist im Stand der Technik bekannt, wie beispielsweise durch die DE 197 58 108 C1, die EP 1 047 510 B1 oder die DE 197 46 728 C1.

Dabei offenbart die EP 1 047 510 B1 ein Verfahren zum endlosen Erzeugen von warmgewalzten Flachprodukten aus dünn gegossenem Band, bei welchem das dünn gegossene Band unter Schutzgasatmosphäre gesteuert gekühlt wird und ausgehend von dem Schmelze enthaltenden Gefäß die Schmelze auf eine mitlaufenden Kokille befördert wird.

Die EP 0 334 802 B1 beschreibt eine Gießeinrichtung und ein Verfahren zur kontinuierlichen Herstellung von Metallband mit in Bandabzugsrichtung der Gießdüse nachgeordneten Mitteln zur Feststellung der Dicke des gegossenen Bandes. Bevorzugte Messmittel sind hierbei radiometrisch arbeitende Messgeräte.

In der DE 197 46 728 C1 werden eine Vorrichtung und ein Verfahren zum Angießen eines endabmessungsnahen Metallbandes beschrieben. Die gesamte Regelung der Schmelzenzuführung wird unmittelbar über die Pegelmessung in der Eingießkammer oder die Höhenstandsmessung des fertigen Bandes durchgeführt.

Die DE 196 18 923 A1 beschreibt ein Verfahren zum Messen der Höhe eines Flüssigkeitsspiegels, insbesondere einer Metallschmelze, bei dem eine Messsonde mit einem Gas eines vorbestimmten Druckes durchströmt wird.

In der JP 61137658 wird die Herstellung eines schnell abkühlenden, dünnen Metallbandes beschrieben, wobei die Dicke des Metallbandes nach dem Aufwickeln mittels Mikrometer ermittelt wird.

Der mitlaufenden Kokille nachgeordnet sind Walzen von einer Walzstraße vorgesehen, um das gegossene Metallband bzw. die gegossene Schmelze weiter zu bearbeiten und auf die gewünschten Maße und Materialeigenschaften zu bringen. Damit die Walzen ein homogenes Gussprodukt erzeugen können, ist daher eine möglichst homogene Dicke des gegossenen Metallbandes bzw. der gegossenen Schmelze notwendig, was jedoch in den Anlagen zum Stand der Technik, wie es sich gezeigt hat, nicht in dem ausreichenden Maße realisiert werden kann.

### Darstellung der Erfindung, Aufgabe, Lösung, Vorteile

Aufgabe der Erfindung ist es, eine Vorrichtung, eine Verwendung einer Vorrichtung und ein Verfahren zur Durchführung einer Messung mittels einer Messvorrichtung insbesondere zur Messung der Dicke einer Schmelze innerhalb einer Metallgießanlage zu schaffen, welche die Herstellung von Walzprodukten oder Bändern oder Profilen mit weitestgehend homogenen Abmessungen und Materialeigenschaften erlaubt.

Erfindungsgemäß wird die Aufgabe bezüglich der Vorrichtung mit den Merkmalen von Anspruch 1 gelöst mit einer Vorrichtung zur Messung einer Dicke insbesondere zur Anwendung in Gießanlagen von Bändern oder Profilen mit zumindest einer Messvorrichtung, wobei die Dicke einer flüssigen oder teigigen Schmelze oder eines erstarrten Gussproduktes auf einer Kokille oder in einem Gefäß gemessen wird. Dabei ist es besonders vorteilhaft, wenn die bewegte Schmelze oder das Gussprodukt überwacht und deren Dicke ermittelt wird. Durch die Ermittlung der Dicke über die Breite verteilt, kann ein Profil der Schmelze ermittelt werden und im Falle einer nicht optimalen Oberflächenstruktur oder Neigung kann dem durch Regel- oder Steuerungseingriffe entgegen gewirkt werden.

Der Begriff Metall umfasst im Rahmen der vorliegenden Erfindung auch Metalllegierungen. Erfindungsgemäß arbeitet die Messvorrichtung berührungslos und wird die Oberfläche überwacht bzw. ermittelt. Dabei arbeitet erfindungsgemäß die Messvorrichtung mittels eines Lasers und eines optischen Sensors. Erfindungsgemäß ist ein Laser und ein entsprechender Sensor vorgesehen, welcher die Oberfläche scannt oder es kann eine Mehrzahl von Lasern und Sensoren vorgesehen sein, welche jeweils einen Bereich der Oberfläche detektieren oder scannen.

Auch ist es zweckmäßig, wenn aufgrund eines Messsignals des Sensors ein Steuersignal erzeugt wird zur Steuerung des Massenflusses einer Schmelze aus einem Schmelze enthaltenden Gefäß. Dadurch kann über den Materialfluss die Dicke der Schmelze oder des Gussproduktes gesteuert werden.

Weiterhin ist es zweckmäßig, wenn aufgrund eines Messsignals ein Steuersignal erzeugt wird zur Steuerung einer Vorrichtung zur Verteilung der Schmelze. Dadurch kann über die Materialverteilung die Oberfläche gesteuert werden.

Auch ist es vorteilhaft, wenn die Dicke der Schmelze in dem Gefäß in einem Einfüllbereich und/oder in einem Zuführbereich zur Kokille gemessen wird. Durch die Messung kann vorteilhaft der Zufluss der Schmelze zum Gefäß gesteuert werden.

Die Aufgabe bezüglich des Verfahrens wird mit den Merkmalen von Anspruch 9 gelöst, wonach ein Verfahren zur Messung einer Dicke insbesondere zur Anwendung in Gießanlagen von Bändern oder Profilen mit einer Messvorrichtung geschaffen wird, wobei die Dicke einer flüssigen oder teigigen Schmelze oder eines erstarrten Gießproduktes auf einer Kokille gemessen wird.

Dabei ist es zweckmäßig, wenn die Messvorrichtung berührungslos arbeitet. Weiterhin ist es zweckmäßig, wenn aufgrund eines Messsignals der Messvorrichtung ein Steuersignal erzeugt wird zur Steuerung des Massenflusses einer Schmelze aus einem Schmelze enthaltenden Gefäß.

Auch ist es vorteilhaft, wenn aufgrund eines Messsignals der Messvorrichtung ein Steuersignal erzeugt wird zur Steuerung einer Vorrichtung zur Verteilung der Schmelze.

Besonders zweckmäßig ist es, wenn die Dicke der Schmelze oder des Gussprodukts über die Breite verteilt gemessen wird. Dadurch kann ein Profil ermittelt werden und anhand der ermittelten Profils können Steuerungs- bzw. Regelungsmaßnahmen getroffen werden, um diesbezüglichen Ungleichmäßigkeiten entgegen zu wirken. Dabei ist es besonders vorteilhaft, wenn das Ergebnis oder die Signale der Dickenmessung über der Breite verteilt zur Steuerung eines Massenflusses und/oder einer Ausrichtung einer Kokille herangezogen wird, um einer Keiligkeit und/oder Welligkeit eines Gießproduktes zumindest entgegenzuwirken.

Die Aufgabe zur Verwendung wird gelöst durch die Merkmale von Anspruch 4.

Vorteilhafte Weiterbildungen sind in den Unteransprüchen beschrieben.

### Kurze Beschreibung der Zeichnungen

Nachstehend wird die Erfindung auf der Grundlage eines Ausführungsbeispiels anhand der Zeichnungen näher erläutert. Es zeigen:
- Fig. 1: eine schematische Darstellung einer Metallgießanlage und
- Fig. 2: ein Ausschnitt einer Aufsicht gemäß Figur 1 und
- Fig. 3: eine Ansicht einer erfindungsgemäßen Vorrichtung.

### Bevorzugte Ausführung der Erfindung

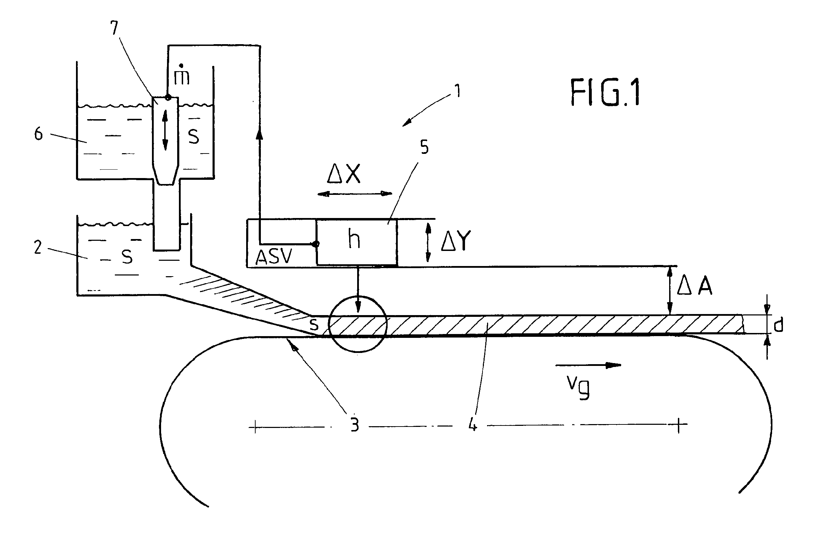

Die Figur 1 zeigt schematisch eine Metallgießanlage 1 mit einem Gefäß 2, in welchem flüssiges Metall, wie beispielsweise eine Stahlschmelze bereitgestellt wird. Dazu weist dass Gefäß 2 vorteilhaft Heizelemente auf, um das flüssige Metall auf Temperatur zu bringen und/oder zu halten, die jedoch nicht dargestellt sind.

Aus dem Gefäß 2 wird vorteilhaft das flüssige Metall bzw. die Schmelze auf die mitlaufende, bewegte Kokille 3 abgelassen, wobei durch das Mitlaufen der Kokille 3 ein Band 4 aus dem flüssigen Metall erzeugt wird, bevor es in den nicht dargestellten nachgeschalteten Stufen einer Walzanlage weiter bearbeitet wird. Auch kann als zusätzliche nachgeschaltete Stufe beispielsweise auch neben der Walzanlage eine Tafelanlage vorgesehen sein. Dann würde das Gussband als Halbzeug ein Zwischenprodukt bilden.

Zur Messung der Dicke des Metallbandes 4 ist eine Messvorrichtung 5 vorgesehen, welche die Oberfläche des Metallbandes berührungslos abtastet und so die Dicke des Metallbandes 4 bestimmt.

Die Messvorrichtung 5 führt eine Bestimmung der Dicke d des Metallbandes 4 durch, so dass eine Steuerung oder Regelung des Massenflusses der Schmelze aus dem Gefäß 2 auf die Kokille 3 durch eine Steuereinheit vorgenommen werden kann. Vorteilhaft kann die Steuereinheit in der Messvorrichtung 5 integriert sein, oder sie ist davon getrennt als Baueinheit vorgesehen.

Die Steuerung des Massenflusses aus dem Gefäß 2 auf die Kokille 3 wird indirekt durch den Massenfluss aus dem Vorratsgefäß 6 in das Gefäß 2 gesteuert. Das Vorratsgefäß 6 weist ebenfalls eine heiße Schmelze auf, welche über einen Auslauf in das Gefäß 2 abfließen kann. Durch die gezielte Bewegung bzw. Ansteuerung eines Verschlusses 7, wie eines Verschlussstopfens o.ä., kann der Abfluss der Schmelze aus dem Vorratsgefäß 6 als Zufluss in das Gefäß 2 gesteuert werden. Beispielsweise kann über die Höhe des Verschlussstopfens in Figur 1 die Größe eines freien Spalts zum Abfluss der Schmelze S eingestellt werden. Dazu kann also die Messvorrichtung 5 ein Steuersignal an eine Betätigungseinheit weiterleiten, welche den Zufluss von Schmelze in das Gefäß 2 steuert.

Somit kann erfindungsgemäß durch die Messung der Dicke des Metallbandes bzw. der Schmelze 4 über die Breite betrachtet, die Steuerung des Gussprofils über die Länge und die Breite über den gesteuerten Massenfluss erfolgen, wobei die Dicke des Metallbandes bzw. der Schmelze gemessen zu haben, vorteilhaft für das nachfolgende inline oder offline Walzen ist.

Vorteilhaft ist insbesondere, wenn die Daten über die Dicke der Schmelze im Anfangsbereich des Metallbandes über die Breite des Metallbandes betrachtet vorliegen.

Besonders vorteilhaft für die Anwendung der Erfindung ist die Messung der Dicke der Schmelze bzw. des Metallbandes am Beginn des Metallbandes im Wesentlichen am Beginn der Kokille bzw. nachdem sich die Schmelze, die aus dem Gefäß 2 auf die mitlaufende Kokille fließt, sich vorteilhaft gleichmäßig verteilt hat. Das bedeutet, dass der Ort der Messung etwa von dem Auslass auf die Kokille soweit entfernt ist, dass sich das ausfließende Metall auf der Kokille gleichmäßig verteilt hat bzw. gleichmäßig verteilt haben sollte.

Die Durchführung der Messung erfolgt erfindungsgemäß berührungslos. Berührungslos arbeitende Messverfahren weisen den Vorteil auf, dass sie beispielsweise mit Abstand von der Messeinrichtung zur Schmelze bzw. zum Metallband durchgeführt werden können, so dass die Messvorrichtung 5 dadurch geschützt angeordnet werden kann. Erfindungsgemäß werden berührungslos arbeitende Lasermessverfahren eingesetzt.

Die Messvorrichtung 5 kann dabei um Δx und Δy verlagert werden, wobei auch der Abstand ΔA von der Schmelze selbst eingestellt werden kann. Dadurch kann die Messvorrichtung an verschiedene Dicken angepasst eingestellt werden und gegenüber Umwelteinflüssen geschützt positioniert werden.

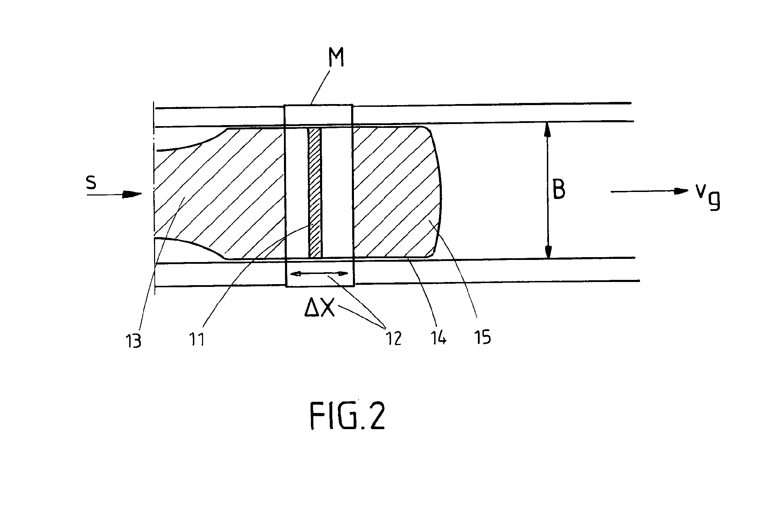

Die Figur 2 zeigt schematisch eine Aufsicht einer Messstelle, welche mittels einer berührungsfrei arbeitenden Messvorrichtung 5 gemessen wird. Dabei stellt 11 den Messbereich eines berührungslos arbeitenden Sensors der Messvorrichtung dar, wie beispielsweise eines Lasers mit dazugehöriger Optik. Das Messfenster 11 ist innerhalb des Bereichs (Δx) 12 verlagerbar. Die Schmelze 13 trifft auf die mitbewegte Kokille 14 und bildet ein Band 15 aus flüssigem Metall bzw. Schmelze mit der Breite B. Die Pfeile zeigen die Richtung der Schmelze und der mitbewegten Kokille an, wobei v_{g} die Geschwindigkeit der mitbewegten Kokille ist. Als Messvorrichtung 5 ist erfindungsgemäß eine berührungslos arbeitende Vorrichtung vorhanden, die einen Laser enthält. Ein Laser, wie beispielsweise ein Laser mit rotem emittierendem Licht oder ein Laser mit blauem emittierendem Licht, kann vorteilhaft eingesetzt werden. Dabei emittiert der Laser das Licht im Bereich des Messfensters und aufgrund der Reflexion kann das zurückgeworfene Licht mittels eines Detektors gemessen werden, so dass aus dem empfangenen Licht die Höhe der Schmelze über die Breite des Bandes detektiert werden kann. Vorteilhaft kann der Laser so gesteuert werden, dass er die Breite des Bandes abscannt.

Alternativ zum Abscannen der Breite der Schmelze oder des Bandes oder Gussprodukts mittels eines Lasers und eines entsprechenden Sensors können auch mehrere Laser und Sensoren nebeneinander oder parallel zueinander angeordnet sein, und jeweils einen Teilbereich der Breite der Schmelze oder des Gussprodukts überwachen, so dass aufgrund der Daten der jeweiligen Laser und der zugehörigen Sensoren ein Dickenprofil ermittelbar ist.

Auch können mehrere Sensoren über die Breite des zu überwachenden Bereichs verteilt angeordnet sein, so dass beispielsweise mehrere Sensoren parallel zueinander oder nebeneinander angeordnet sind, welche parallel über die Breite verteilt die Dicke des zu überwachenden Bandes oder der Schmelze detektieren. Dadurch kann durch das abscannen oder das Messen der Dicke über der Breite des Bandes oder der Schmelze verteilt ein Dickenprofil ermittelt werden.

Besonders vorteilhaft ist die Anordnung der Sensoren in einem Bereich zwischen einer Position, die nahe der Schmelzenaufgabestelle ist und einer Position, die etwa dem Verlassen des Transportbandes entspricht. In diesem Bereich ist die Schmelze vorteilhaft noch flüssig oder zumindest teigig, wobei durchaus auch eine teigige Mischform aus Schmelze und erstarrtem Material, wie beispielsweise Stahl, bestimmbar ist. In einem weiteren Ausführungsbeispiel der Erfindung ist es auch zweckmäßig, die Dicke des erstarrten Stahls über die Breite zu bestimmen.

Besonders vorteilhaft ist die Dickenmessung über die Breite einer Schmelze verteilt, wobei die Schmelze dabei vorteilhaft bewegt ist, beispielsweise in einer horizontalen Kokille, wie beispielsweise bei einem endabmessungsnahen Gießen. Die Messung erfolgt vorteilhaft bereits bei der noch flüssigen Schmelze, idealer Weise möglichst nahe am Einlauf, wobei die Messung vorteilhaft über die Breite verteilt durchgeführt wird. Dadurch kann möglichst frühzeitig eine eventuelle Keiligkeit oder Welligkeit einer Bramme oder eines Gussprodukts erkannt werden, was insgesamt eine Reduzierung von Ausschuss bewirken kann, gegenüber der erst späteren Erkennung erst im erstarrten Zustand.

Wird beispielsweise eine Keiligkeit erkannt, so kann dem durch gezielte Ansteuerung der Neigung der Kokille diese Keiligkeit zumindest reduziert oder gar beseitigt werden. Auch kann bei Vorsehung von mehreren Düsen am Auslauf eines Gefäßes der Einlauf der Schmelze in die Kokille über die Breite gesteuert werden, so dass dadurch eine Keiligkeit oder Welligkeit der Schmelze reduziert werden kann.

Bei einer erkannten Welligkeit der Schmelze kann beispielsweise eine Regelung des Massenzuflusses durchgeführt werden, Dazu kann beispielsweise eine Regelung des Massenflusses durch Stopfen vorgenommen werden.

Die Anordnung der Messvorrichtung 5 kann vorteilhaft derart durchgeführt werden, dass sie in einem ausreichenden Abstand von dem Band der Schmelze vorgesehen ist, damit die Hitze und/oder der Schmutz die Vorrichtung nicht beschädigt. So kann beispielsweise auch eine Abschirmung gegen Wasser, Stahlspritzer, Gas und/oder Hitze vorgenommen werden. Die Messung der Dicke kann auch beispielsweise in einer geschützten oder inertisierten Umgebung erfolgen, so dass die Oberfläche der Schmelze oder des Bandes nicht oder nicht stark oszilliert, so dass eine Verfälschung von Messergebnissen vermieden oder reduziert wird.

Entsprechend ist es erfindungsgemäß vorteilhaft, wenn die Messvorrichtung 5 in einem Gehäuse angeordnet ist, welche zum Schutz und/oder zur Abschirmung vorgesehen ist. Vorteilhaft ist es weiterhin, wenn das Gehäuse bewegbar angeordnet ist, so dass beispielsweise abhängig von der Gießgeschwindigkeit und/oder den Abmessungen des Bandes der Schmelze eine Positionierung des Gehäuses durchgeführt werden kann.

Gemäß eines weiteren nicht-erfindungsgemäßen Beispiels kann die Messvorrichtung 5 statt eines berührungslos arbeitendes Sensorsystems auch mit einem mit Berührung arbeitenden Sensorsystem arbeiten. Dabei kann die Verwendung eines taktilen Niveaugebers als Fühler vorgesehen sein, der im Kontakt steht mit der Oberfläche der Schmelze des Bandes 4. Dabei kann der Fühler, der auch verschleißfest ausgebildet sein kann, permanent oder in zeitlich Abständen, wie beispielsweise in zeitlich oszillierenden Abständen, mit der Schmelze in Kontakt gebracht werden. Durch die Berührung der Schmelzoberfläche kann die Dicke der Schmelze detektiert werden. Auch kann die Dicke der Schmelze in der Breitenrichtung erfasst werden, wobei dazu beispielsweise ein Verfahren in Breitenrichtung erfolgen kann. Auch können mehrere taktile Sensoren bzw. Messwertgeber nebeneinander angeordnet werden, um ein Dickenprofil über die Bandbreite erfassen oder erzeugen zu können.

Weiterhin kann es auch zweckmäßig sein, wenn der Sensor oder die Sensoren derart angeordnet oder ausgebildet sind, dass eine Differenzmessung durchführbar ist. Eine solche Differenzmessung kann beispielsweise dadurch erfolgen, dass ohne Vorliegen einer Schmelze ein Nullpunkt oder Referenzpunkt zwischen Sensor und Transportbandoberfläche vorliegt oder erkannt wird und nach Aufgabe der Schmelze sich ein reduzierter Weg oder ein reduzierter Abstand zwischen Sensor und Messpunkt erkennen lässt. Der dann erkannte Wegunterschied oder Abstandsunterschied würde dann der Dicke der Schmelze bzw. des Gussbandes oder -produkts entsprechen.

Auch kann eine Messung der Dicke durch Durchdringung der Schmelze bzw. des Gussprodukts mit Strahlung vorgenommen werden, wobei dann beispielsweise aus Laufzeitunterschieden zwischen dem von dem Sensor ausgesendeten Signal und reflektierten Signal zwischen einem Zustand ohne Schmelze/Gussprodukt bzw. mit Schmelze/Gussprodukt eine Dicke ermittelbar ist.

Ist die Dicke der Schmelze an einer definierten Position im Wesentlichen unmittelbar nach einem Verteilen der Schmelze auf der mitlaufenden Kokille erfasst, so kann ein Steuersignal erzeugt werden zur Steuerung des Massenflusses von dem Gefäß 2 auf die Kokille 3. Dies ist daher vorteilhaft, weil dadurch eine Toleranz der Dicke der Schmelze über die Breite und/oder über die Länge innerhalb eines vorgebbaren Maßes bzw. Bereichs erreicht werden kann.

Weiterhin kann eine solche Gießanlage um eine Vorrichtung zur aktiven Verteilung der Schmelze auf der mitlaufenden Kokille erweitert werden. Dabei können mechanische oder elektromagnetische Schmelzdistributoren auf einer Zuführdüse mit segmentierter Ansteuerung bzw. Wirkung über die Breite oder pneumatische sowie vakuumtechnische Vorrichtungen und/oder Manipulatoren vorgesehen sein, welche die Schmelze gleichmäßig auf der Kokille verteilen.

Durch die Messung der Dicke der Schmelze kann neben der Steuerung des Massenflusses ggfs. auch eine Vorrichtung zur Vergleichmäßigung und/oder ein solcher Manipulator, wie beispielsweise Rührer oder Unterdruckverteiler, aufgrund eines entsprechenden Steuersignals gesteuert werden.

Bei der Verwendung von Lasermessverfahren bzw. Lasermessmethoden können solche verwendeten Laser, auch Strichlaser genannt, eine Linie quer zur Gießrichtung unter einem vorgebbaren Winkel auf dem Schmelzfilm bzw. auf der Oberfläche der Schmelze bzw. des Gussprodukts erzeugen. Die Messung der Dicke der Schmelze bzw. des Gussprodukts oder deren Profil, wie beispielsweise die Kantenüberhöhung, kann entsprechend mittels Video-Bildverarbeitung unter einem Winkel erfolgen. Ein solches Verfahren wird auch Lichtschnittverfahren genannt. Entsprechend kann entweder ein Laser oder es können auch eine Mehrzahl von Lasern verwendet werden, die über die Breite des Strangs verteilt angeordnet sind.

Auch kann der Laser derart angeordnet sein, dass er von oben, beispielsweise auch im Wesentlichen senkrecht, auf die Oberfläche der Schmelze oder des Gussprodukts auftrifft. Dabei kann dann über den Laufzeitunterschied des reflektierten Lichts im Vergleich mit einem Referenzwert die Dicke der Schmelze bzw. des Gussprodukts ermittelt werden.

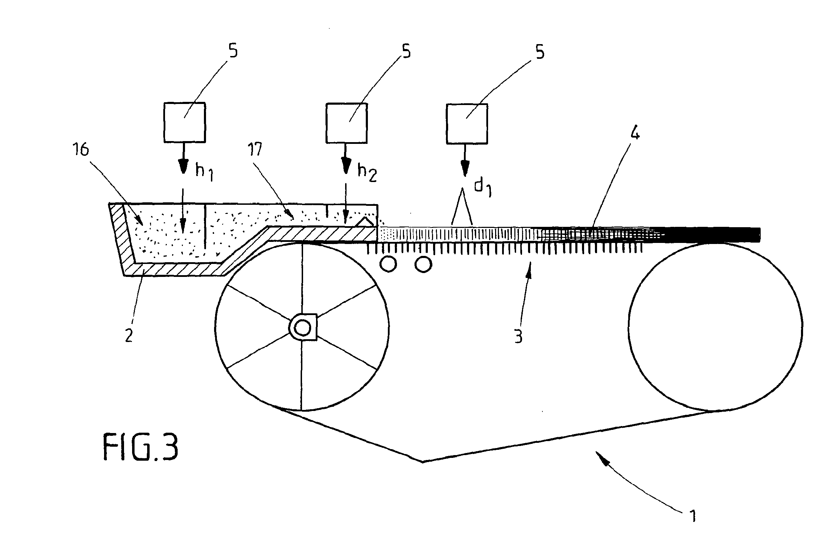

Die Figur 3 zeigt eine Vorrichtung zur Messung einer Dicke einer Schmelze in einem Gefäß 2, wobei die Schmelze aus einem Vorratsgefäß in das Gefäß 2 gelangt, was in Figur 3 nicht gezeigt ist. Zur Messung der Dicke der Schmelze sind Messvorrichtungen 5 vorgesehen, welche die Dicke der Schmelze auf der Kokille 3 messen können oder in dem Gefäß 2. In dem Gefäß 2 sind dabei zwei Positionen vorteilhaft, nämlich der Einfüllbereich 16, in welchem die Schmelze aus einem Vorratsgefäß oder Verteiler eingefüllt wird, und der Zuführbereich 17, in welchem die Schmelze der Kokille 3 mit vorgegebener Dicke auf das laufende Band zugeführt wird. Der Zuführbereich 17 ist somit in Richtung auf das Ende des Gefäßes 2 in Richtung auf das laufende Band gelegen. So kann die Dicke d1 auf der Kokille, h1 und h2 im Gefäß 2 im Einfüllbereich 16 und im Zuführbereich 17 gemessen werden. Die Messung kann somit im Bereich der stehenden Schmelze oder im Bereich der bewegten Schmelze erfolgen.

### Bezugszeichenliste

- 1: Metallgießanlage
- 2: Gefäß
- 3: Kokille
- 4: Band
- 5: Messvorrichtung
- 6: Vorratsgefäß
- 7: Verschluss
- 11: Messbereich
- 12: Bereich
- 13: Schmelze
- 14: Kokille
- 15: Band
- 16: Einfüllbereich
- 17: Zuführbereich

## Patentansprüche

1. Vorrichtung zur Messung einer Dicke von Bändern oder Profilen, insbesondere in horizontalen Bandgießanlagen, aufweisend:
ein Gefäß (2), aus dem eine flüssige oder teigige Metall- oder Stahlschmelze austritt,
eine mitlaufende Kokille (2), zur Aufnahme der flüssigen oder teigigen Metall- oder Stahlschmelze,
eine Messvorrichtung (5), zur berührungslosen Messung der Dicke der flüssigen oder teigigen Metallschmelze auf der Kokille (3),
eine Steuerung, mit der aufgrund eines Messsignals der Messvorrichtung (5) ein Steuersignal erzeugbar ist, mit dem eine Vorrichtung zur Verteilung der Schmelze steuerbar ist,
**dadurch gekennzeichnet,**
**dass** die Messvorrichtung (5) einen Laser und einen optischen Sensor umfasst, die so angeordnet sind, dass die Dicke über die Breite verteilt messbar ist.

2. Vorrichtung nach Anspruch 1,
**dadurch gekennzeichnet,**
**dass** aufgrund eines Messsignals ein Steuersignal erzeugbar ist zur Steuerung des Massenflusses einer Schmelze (13) aus einem die Schmelze (13) enthaltenden Gefäß.

3. Vorrichtung nach einem der vorhergehenden Ansprüche,
**dadurch gekennzeichnet,**
**dass** die Dicke der Schmelze (13) in dem Gefäß (2) in einem Einfüllbereich und/oder in einem Zuführbereich zur Kokille (3) messbar ist.

4. Verfahren zur Messung einer Dicke insbesondere zur Anwendung in horizontalen Bandgießanlagen (1) von Bändern oder Profilen mit einer Messvorrichtung (5), wobei eine flüssige oder teigige Metall- oder Stahlschmelze aus einem Gefäß (2) auf eine mitlaufende Kokille (3) tritt und die Dicke der flüssigen oder teigigen Schmelze (13) auf der Kokille (13) mit einer Messvorrichtung (5) berührungslos gemessen und die Oberfläche der flüssigen oder teigigen Schmelze (13) überwacht wird, und dass ein Messsignal erfasst wird und aufgrund des Messsignals ein Steuersignal erzeugt wird, zur Steuerung einer Vorrichtung zur Verteilung der Schmelze
**dadurch gekennzeichnet,**
**dass** die Messvorrichtung (5) mittels eines Lasers und eines optischen Sensors die Dicke der Schmelze über die Breite verteilt misst.

5. Verfahren nach Anspruch 4,
**dadurch gekennzeichnet,**
**dass** das Ergebnis oder die Signale der Dickenmessung über der Breite verteilt zur Steuerung eines Massenflusses und/oder einer Ausrichtung einer Kokille (3) herangezogen wird, um einer Keiligkeit und/oder Welligkeit eines Schmelze (13) zumindest entgegenzuwirken.

## Claims

1. Device for measuring a thickness of strips or sections, particularly in horizontal strip casting plants, comprising:
a vessel (2) from which a liquid or pasty metal melt or steel melt issues,
a co-travelling mould (2) for receiving the liquid or pasty metal melt or steel melt,
a measuring device (5) for contactless measurement of the thickness of the liquid or pasty metal melt on the mould (3), and
a control by which on the basis of a measurement signal of the measuring device (5) a control signal by which a device for distribution of the melt is controllable can be generated,
**characterised in that**
the measuring device (5) comprises a laser and an optical sensor which are so arranged that the thickness is measurable in distribution over the width.

2. Device according to claim 1, **characterised in that** on the basis of a measurement signal a control signal can be generated for controlling the mass flow of a melt (13) from a vessel containing the melt (13).

3. Device according to one of the preceding claims, **characterised in that** the thickness of the melt (13) in the vessel (2) can be measured in a filling region and/or in a feed region to the mould (3).

4. Method of measuring a thickness, particularly for use in horizontal strip casting plants (1) of strips or sections by a measuring device (5), wherein a liquid or pasty metal melt or steel melt issues from a vessel (2) onto a co-travelling mould (3) and the thickness of the liquid or pasty melt (13) on the mould (13) is contactlessly measured by a measuring device (5) and the surface of the liquid or pasty melt (13) is monitored, and that a measurement signal is detected and on the basis of the measurement signal a control signal for controlling a device for distributing the melt is generated, **characterised in that** the measuring device (5) measures the thickness of the melt in distribution over the width by means of a laser and an optical sensor.

5. Method according to claim 4, **characterised in that** the result or the signals of the thickness measurement distributed over the width is or are utilised for control of a mass flow and/or an orientation of a mould (3) in order to at least counteract wedge-shaping and/or waviness of a melt (13).

## Revendications

1. Dispositif pour la mesure d'une épaisseur de bandes ou de profilés, en particulier dans des installations horizontales de coulée continue, présentant :
une cuve (2) d'où sort un métal fondu ou une masse fondue d'acier sous forme liquide ou sous forme pâteuse ;
une lingotière (3) travaillant en parallèle pour la réception du métal fondu ou de la masse fondue d'acier sous forme liquide ou sous forme pâteuse ;
un dispositif de mesure (5) pour la mesure sans contact de l'épaisseur du métal fondu sous forme liquide ou sous forme pâteuse, sur la lingotière (3) ;
une commande avec laquelle on peut générer un signal de commande sur base d'un signal de mesure du dispositif de mesure (5), avec lequel signal de commande on peut commander un dispositif pour la répartition de la masse fondue ;
**caractérisé en ce que** le dispositif de mesure (5) comprend un laser et un capteur optique qui sont disposés de telle sorte que l'on peut procéder à une mesure de l'épaisseur répartie sur la largeur.

2. Dispositif selon la revendication 1, **caractérisé en ce que** l'on peut générer, sur base d'un signal de mesure, un signal de commande pour la commande du flux massique d'une masse fondue (13) à partir d'une cuve contenant la masse fondue (13).

3. Dispositif selon l'une quelconque des revendications précédentes, **caractérisé en ce que** l'on peut mesurer l'épaisseur de la masse fondue (13) dans la cuve (2) dans une zone de remplissage et/ou dans une zone d'amenée à la lingotière (3).

4. Procédé pour la mesure d'une épaisseur, en particulier pour son application en particulier dans des installations horizontales de coulée continue (1) de bandes ou de profilés, avec un dispositif de mesure (5), dans lequel un métal fondu ou une masse fondue d'acier sous forme liquide ou sous forme pâteuse sort d'une cuve (2) pour pénétrer sur une lingotière (3) travaillant en parallèle, et on mesure sans contact l'épaisseur de la masse fondue (13) sous forme liquide ou sous forme pâteuse sur la lingotière (13) avec un dispositif de mesure (5) et on surveille la surface de la masse fondue (13) sous forme liquide ou sous forme pâteuse, et on enregistre un signal de mesure et on génère un signal de commande sur base du signal de mesure pour la commande d'un dispositif pour la répartition de la masse fondue, **caractérisé en ce que** le dispositif de mesure (5) mesure, au moyen d'un laser et d'un capteur optique, l'épaisseur de la masse fondue, répartie sur la largeur.

5. Procédé selon la revendication 4, **caractérisé en ce qu'**on se base sur le résultat ou sur les signaux de la mesure de l'épaisseur répartie sur la largeur pour la commande du flux massique et/ou de l'orientation d'une lingotière (3), dans le but d'au moins contrecarrer une prismaticité et/ou une ondulation d'une masse fondue (13).
